# EUROPEAN PATENT SPECIFICATION

(11) **EP 2 258 609 B1**
(45) Date of publication and mention of the grant of the patent: **22.08.2012**
(21) Application number: 10005737.1
(22) Date of filing: 02.06.2010
(51) Int. Cl.: B62J 15/02

(54) **Elements for gripping the upper ends of the rods holding the mudguard of bicycles**
Elemente zum greifen des oberen Endes einer Fahrradschutzblechstützstange
Eléments pour fixer l'extrémité supérieure des tringles de support de garde-boue de bicyclette

(30) Priority: 03.06.2009 IT PD20090159
(43) Date of publication of application: 08.12.2010
(73) Proprietor: Eurofender s.r.l., 35136 Padova (PD) (IT)
(72) Inventor: Silvestri, Alberto, 35136 Padova PD (IT)

(56) References cited:
- EP-A1- 1 790 558
- EP-A1- 1 852 340
- EP-A2- 1 466 821

## Description

There are many well-known solutions for fixing the upper ends of the rods holding the mudguard of bicycles, from the past up until more recent times.

With the advent of plastic materials, the various manufacturers made systems aimed at simplifying said elements, with advantages both from an economic and practicality viewpoint, while maintaining the principle of the security of the grip.

There are various well-known systems where the elements grip the upper ends of the rods using devices that use screws for tightening or where screws are not used at all.

In this latter case the devices are composed of two tapering parts that can be joined together, which wedge into one another; and because the internal part has longitudinal splits, there is tightening against the upper part of the rods on which it is applied.

There are well-known solutions where the elements for fastening the mudguard rods are objects placed at the ends of normal U shaped profile; or else said elements have at their upper ends particular configurations that can fix themselves to the edges of the mudguard.

The solutions set out in brief here, while different from one another, have all had their own specific merits at various times.

The features of the preamble of claim 1 are known from EP 1 790 558.

All the various solutions currently on the market regarding elements for fastening rods for holding the mudguard have the drawback of being quite complex, both in the way they are made as well as how they are used.

This invention, as disclosed in claim 1, overcomes drawbacks regarding the fastening of the rods holding the mudguard of bicyclers used on the market, creating a single element that, seen in section, has a simplified configuration of a collar clamp, where the two wings constitute the zones for tightening the collar.

The part that when withdrawn hold the two wings separate from one another is made up of a collar that is pliably elastic and that establishes a cylindrical tubular hollow that is open longitudinally according to its generatrix.

Putting the two wings together, because the collar is elastic, the width of the tubular cavity is reduced, so that in this way it is tendentially interfering with respect to the section of the end of the mudguard-holding rod once inserted, establishing the grip.

The ends of the wings have toothed appendages so that by pressing one wing against the other the teeth snap together.

In this patent the grip is established following the union of the appendages of the two tabs that make up the two projections like terminals on the two opposing sides of a U shaped profile that is fixed to the mudguard, which are therefore solidly joined.

What has been explained above is evident from an examination of the attached table of drawings.
Fig. 1 is a front view showing two elements opposite each other gripping the upper ends of the rods holding the mudguard where the two elements are protruding parts of a U shaped profile to be fixed to the mudguard.
Fig. 2 shows the part opposite the assemblage represented in Fig. 1.

We can see that the fixing elements, seen from behind, show the ribbing for joining the two tabs of which they are made.

Fig. 3 is the external side view of the assemblage of one of the fastening elements and the U shaped profile that supports it.

Fig. 4 is the view from above, corresponding to fig. 1.

We can see the two holes in the U shaped profile for fastening it to the mudguard of the bicycle.

Fig. 5 is the view from below, corresponding to fig. 1.

We can see solidly joined to the two sides of the U shaped profile the two elements for fastening the upper ends of the rods holding the mudguard. We can see on each of the two elements that the internal tab is ajar respect to the adjacent external tab.

As we can see also from the previous diagrams the external tab is solidly joined to the U shaped profile from which it descends and is fixed; the external tab is capable of being brought alongside said external tab.

We can see that the two tabs in line with the ribbing that unites them create an open cylindrical cavity and that they have, in line with their ends opposite the ribbing, toothed appendages for maintaining the coupling since in the stage when the two upper ends grip the rods holding the mudguard the moveable tab is put beside the fixed one.

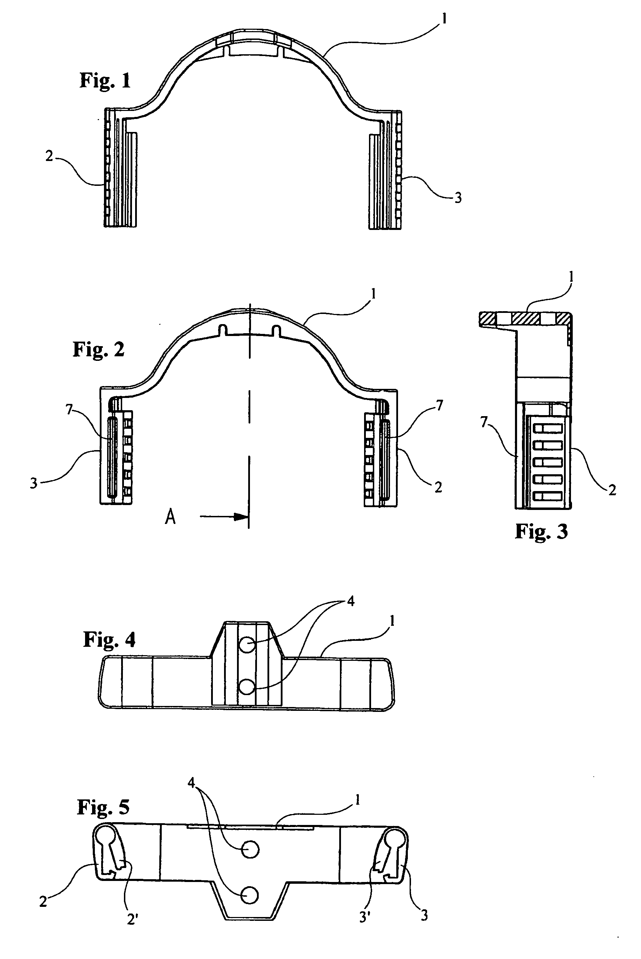

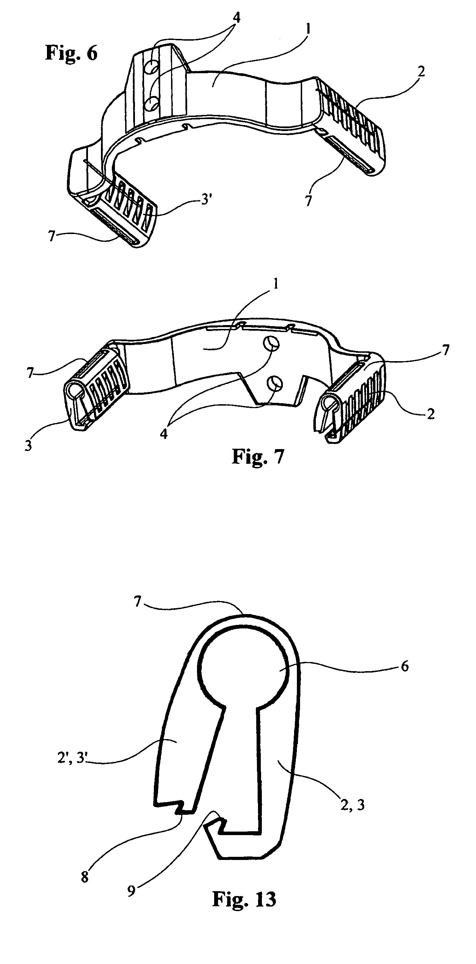

Fig. 6 is an axonometric view of the rod in fig. 2.

Fig. 7 is an axonometric view from below of fig. 2.

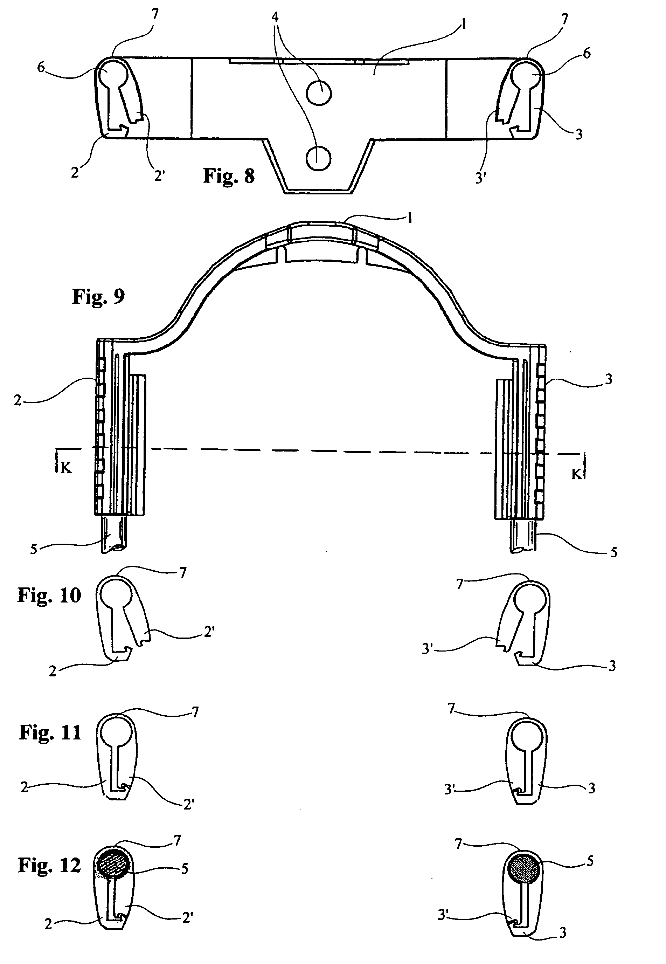

Fig. 8 is the representation of fig. 5 enlarged with respect to fig. 5.

Fig. 9 is the enlarged representation of fig. 1, with the difference that two parts of the rods holding the mudguard have been inserted and the indication of the section line for viewing the successive diagrams (which are not filled from the section line for greater compression).

Fig. 10 shows the fastening elements of the rods holding the mudguard from below, with the tabs apart.

Fig. 11 corresponds to fig. 10 where the fastening elements are shown without the insertion of the rods where the placement of the moveable tab next to the fixed one has been carried out with the coupling of the toothed appendages at the ends of said tabs that stabilises the configuration of the tubular cavity.

Fig. 12 is the representation corresponding to fig. 11 where now in section we can see the rods holding the mudguard have been inserted.

Fig. 13 is another enlargement of an element in fig. 10 to more fully point out the toothed appendages which the tabs of the element for fastening the rods holding the mudguard are fitted with.

For gripping rods 5 of the mudguard holder the elements 2, 2', 7, 6, 3, 3', which make up the projections of the U shaped profile, are rendered solidly fixed to the mudguard (not shown); fixing said U shaped profile 1 to the mudguard using rivets (not shown) passing through the holes 4 which are on the U shaped profile 1.

The upper ends of the rods holding the mudguard 5 are inserted, having previously selected the right length, into the cavity 6 of the elements 2, 2', 7, 6, 3, 3'.

You then proceed (either by hand or with an appropriate tool) to press together the tabs 2, 2' and the tabs 3, 3' until their respective teeth 8, 9 snap together to close.

With said operation the elastic pliability of the spine 7 ensures that accompanying the reduction of the original area of each of the cavities 6, the entire delimitation of each of said cavities 6 is pressed against the surface of each of the rods 5 inserted inside, gripping them.

Included in the same concept set out above is any other configuration of the cavity 6, circular or practically circular or any other section (semi-circular), grooved or with raised areas (and/or longitudinal and/or transversal), which manages with the method set out above to join with the rods 5 for holding them or gripping them.

Moreover, it is clear that the tabs can also have other configurations other than having teeth for a snap coupling; being able to be shorter than the element for fastening the rods holding the mudguard (reducing the encumbrance and facilitating the coupling) or else it can have one or more fixed tabs with appendages that have teeth set at the ends of the above-mentioned tabs in a perpendicular plane or another position with respect to that passing through the axis of the tubular cavity.

After what has been described above, in addition to being an innovative simple realisation of the elements for gripping the upper ends of the rods for holding the mudguard, the grip of these elements that clench tightly is extremely effective, exploiting their capacity of pliable elasticity against the surface of the portions of the rods that are inside them.

It should be made clear here that the gripping elements in the patent can be applied directly to the edge of the mudguard and therefore without the presence of the U shaped profile, giving them at their upper end an adequate connection, not excluding the connections already on the market.

## Claims

1. Elements for gripping the upper ends of the rods (5) holding the mudguard of bicycles, said elements (2, 2', 6, 7, 3, 3') have a cylindrical cavity for receiving said rod, (6) opened in accordance with a generatrix, in line with which are two tabs (2, 2', 3, 3') slightly spaced from one another, **characterised by** the fact that each said element is a single element, and said tabs are fitted with coupling devices (8, 9) at their ends that can be snapped together when pressed against each other.

2. Elements for gripping the upper ends of the rods (5) holding the mudguard of bicycles according to claim 1, **characterised by** the fact that from the part opposite the tabs, the cavity (6) is delimited by a pliable spine (7).

3. Elements for gripping the upper ends of the rods (5) holding the mudguard of bicycles according to claim 1 or 2 **characterised by** the fact that the snap release clamping devices (8, 9) at the end of the tabs (2, 2', 3, 3') are in the form of male and female hooked teeth.

4. Elements for gripping the upper ends of the rods (5) holding the mudguard of bicycles according to one or more of the previous claims **characterised by** the fact that one of the tabs is joined to the part that supports it (1) that is fixed to the mudguard.

5. Elements for gripping the upper ends of the rods (5) holding the mudguard of bicycles according to claim 4 **characterised by** the fact that the part to which one of the two tabs (2, 3) is solidly joined is a U shaped profile that is fixed to the mudguard.

6. Elements for gripping the upper ends of the rods (5) holding the mudguard of bicycles according to one or more of the previous claims **characterised by** the fact that said cavity (6) has a circular or semi-circular section, or even another shape, so that its smooth or grooved surface, or with relief markings, works together with the rods (5) to hold them or grip them.

7. Elements for gripping the upper ends of the rods (5) holding the mudguard of bicycles according to one or more of the previous claims **characterised by** the fact that the tabs are shorter in length than the element for fastening the rods holding the mudguard.

8. Elements for gripping the upper ends of the rods (5) holding the mudguard of bicycles according to one or more of the previous claims **characterised by** the fact that the movable coupling tabs are one or more, and that they couple with one or more fixed tabs.

9. Elements for gripping the upper ends of the rods (5) holding the mudguard of bicycles according to claims 3-8 **characterised by** the fact that the teeth on the ends of the above-mentioned tabs lie in an orthogonal plane, or other planes, with respect to the one passing through the axis of the tubular cavity.

## Patentansprüche

1. Elemente zum Einspannen der oberen Enden der Stäbe (5), die das Schutzblech von Fahrrädern halten; besagte Elemente (2, 2', 6, 7, 3, 3') verfügen über einen zylindrischen Hohlraum zur Aufnahme des besagten Stabs (6), sind an einer Kante offen, an der zwei Aufhänger (2, 2', 3, 3') in kurzem Abstand voneinander angeordnet sind, und sind **dadurch gekennzeichnet, dass** jedes der besagten Elemente ein Einzelelement ist, und dass die besagten Aufhänger an ihren Enden über Anschlussstücke verfügen (8, 9), die einrasten, sobald sie aneinander gedrückt werden.

2. Elemente zum Einspannen der oberen Enden der Stäbe (5), die das Schutzblech von Fahrrädern halten, gemäß Patentanspruch 1 dadurch charakterisiert, dass der Hohlraum (6) durch das Bauteil gegenüber den Aufhängern mittels eines biegsamen Rückens (7) begrenzt ist.

3. Elemente zum Einspannen der oberen Enden der Stäbe (5), die das Schutzblech von Fahrrädern halten, gemäß Patentanspruch 1 oder 2 dadurch charakterisiert, dass die Spannvorrichtungen mit Schnappverschluss (8, 9) am Ende der Aufhänger (2, 2', 3, 3') die Form von hakenförmigen Zähnen aufweisen.

4. Elemente zum Einspannen der oberen Enden der Stäbe (5), die das Schutzblech von Fahrrädern halten, gemäß einem oder mehrerer der vorhergehenden Patentansprüche dadurch charakterisiert, dass einer der Aufhänger mit dem Bauteil verbunden ist, dass den Aufhänger stützt (1), der am Schutzblech befestigt ist.

5. Elemente zum Einspannen der oberen Enden der Stäbe (5), die das Schutzblech von Fahrrädern halten, gemäß Patentanspruch 4 dadurch charakterisiert, dass einer der beiden Aufhänger (2, 3) an einem U-förmigen, sich am Schutzblech befindlichen Bauteil befestigt ist.

6. Elemente zum Einspannen der oberen Enden der Stäbe (5), die das Schutzblech von Fahrrädern halten, gemäß einem oder mehrerer der vorhergehenden Patentansprüche dadurch charakterisiert, dass der besagte Hohlraum (6) eine runde oder halbrunde Form, oder sogar eine andere Form hat, so dass dessen glatte, reliefförmige oder genutete Oberfläche mit den Stäben (5) zusammenwirkt, um sie zu halten oder zu greifen.

7. Elemente zum Einspannen der oberen Enden der Stäbe (5), die das Schutzblech von Fahrrädern halten, gemäß einem oder mehrerer der vorhergehenden Patentansprüche dadurch charakterisiert, dass die Aufhänger kürzer sind als die Elemente zur Befestigung der Stäbe, die das Schutzblech halten.

8. Elemente zum Einspannen der oberen Enden der Stäbe (5), die das Schutzblech von Fahrrädern halten, gemäß einem oder mehrerer der vorhergehenden Patentansprüche dadurch charakterisiert, dass sich ein oder mehrere bewegliche Anschlussstücke an den Aufhängern befinden, und dass diese mit einem oder mehreren festen Aufhängern verbunden sind.

9. Elemente zum Einspannen der oberen Enden der Stäbe (5), die das Schutzblech von Fahrrädern halten, gemäß Patentanspruch 3-8 dadurch charakterisiert, dass die Zähne an den Enden der oben genannten Aufhänger rechtwinklig oder andersartig angeordnet sind, wobei ein Ende durch die Achse des röhrenförmigen Hohlraums verläuft.

## Revendications

1. Les éléments servant à saisir les extrémités supérieures des tiges de préhension (5) qui maintiennent le garde-boue des vélos, ces dits éléments (2, 2', 6, 7, 3, 3') possèdent une cavité cylindrique qui portent les dites tiges (6) ouvertes conformément à la génératrice, alignée avec deux rondelles (2, 2', 3, 3') légèrement espacées l'une de l'autre qui sont **caractérisées par le fait que** chaque dit élément soit élément unique, et que les dites rondelles soient munies de dispositifs d'assemblage (8, 9) à leurs extrémités qui peuvent être joints lorsqu'ils sont pressés l'un contre l'autre.

2. Les éléments servant à saisir les extrémités supérieures des tiges de préhension (5) qui maintiennent le garde-boue des vélos conformément à la revendication n° 1 sont **caractérisés par le fait qu'**à partir de la partie opposée des rondelles, la cavité (6) soit délimitée par une colonne souple (7).

3. Les éléments servant à agripper les extrémités supérieures des tiges de préhension (5) qui maintiennent le garde-boue des vélos conformément à la revendication n° 1 ou n°2 sont **caractérisés par le fait que** l'insertion libérant des dispositifs de serrage (8, 9) à l'extrémité des rondelles (2, 2', 3, 3') soient sous la forme d'un axe d'engrenage mâle ou femelle.

4. Les éléments servant à agripper les extrémités supérieures des tiges de préhension (5) qui maintiennent le garde-boue des vélos conformément à une ou plusieurs des revendications sont **caractérisées par le fait qu'**une des rondelles soit jointe à la partie qui la supporte (1) qui est elle-même fixée au garde-boue.

5. Les éléments servant à agripper les extrémités supérieures des tiges de préhension (5) qui maintiennent le garde-boue des vélos conformément à la revendication n°4 sont **caractérisés par le fait que** la partie qui se voit jointe à une des deux rondelles (2, 3) soit solidement jointe à un profil en U fixé au garde-boue.

6. Les éléments servant à agripper les extrémités supérieures des tiges de préhension (5) qui maintiennent le garde-boue des vélos conformément à une ou plusieurs des revendications sont **caractérisés par le fait que** la dite cavité (6) ait une section circulaire ou semi-circulaire, ou même d'une autre forme, de manière à ce que sa surface lisse ou rainurée ou bien en relief fonctionne en coordination avec les rondelles (5) afin de pouvoir les tenir ou les agripper.

7. Les éléments servant à agripper les extrémités supérieures des tiges de préhension (5) qui maintiennent le garde-boue des vélos conformément à une ou plusieurs des revendications sont **caractérisés par le fait que** les rondelles de fixation soient plus courtes en longueur que l'élément servant à maintenir les rondelles de fixation maintenant le garde-boue.

8. Les éléments servant à agripper les extrémités supérieures des tiges de préhension (5) qui maintiennent le garde-boue des vélos conformément à une ou plusieurs des revendications sont **caractérisée par le fait que** les rondelles de fixation mobiles soient présentes en un ou plusieurs exemplaires, et qu'elles se joignent à une ou plusieurs rondelles fixes.

9. Les éléments servant à agripper les extrémités supérieures des tiges de préhension (5) qui maintiennent le garde-boue des vélos conformément aux revendications allant du n°3 au n° 8 sont **caractérisés par le fait que** les dents aux extrémités des susdites rondelles de fixation reposent un plan orthogonal ou autre, pour ce qui est du plan passant à travers l'axe de la cavité tubulaire.
